# EUROPEAN PATENT APPLICATION

(11) **EP 1 684 376 A1**
(43) Date of publication of application: **26.07.2006**
(21) Application number: 06100821.5
(22) Date of filing: 25.01.2006
(51) Int. Cl.: H01Q 1/06, H01Q 1/42, H01Q 1/34, F21S 8/00, G01S 7/02, H01Q 3/00

(54) **Radome illumination system**

(30) Priority: 25.01.2005 NZ 53790905
(71) Applicant: Navman New Zealand, Auckland (NZ)
(72) Inventor: Korte, Donald Randolph, 33786 Belleair Beach, FL (US)
(74) Representative: Brunner, Michael John

(57) **Abstract**

A visual illumination system incorporated between upper (3) and lower (4) radar dome assemblies external to a ship or boat's bridge or cockpit. The visual illumination system provides a visual indication for personnel moving around the upper deck, of those sectors in which the radar antenna is transmitting. The visual illumination system may also provide a visual indication of which sectors arc currently blanked thereby reducing a user's risk of inadvertent exposure to electromagnetic radiation. Visual indicators such as LEDs (6) are spaced in sectors about the radar assembly with each LED being energised when the antenna transmits in its sector. The visual illumination system may be also installed on masthead assemblies where the radar antenna is not enclosed within a radar dome.

## Description

### BACKGROUND TO THE INVENTION

### Field of the Invention

The present invention relates to a radar system and more specifically to a visual illumination system external to a radar system which provides a visual indication of radar sector blanking.

### Summary of the Prior Art

Radar display systems are generally located inside the enclosed bridge on large shipping vessels or in the cockpit on smaller cruising or pleasure craft which have radar systems installed. A number of systems are known in the art for providing an indication of a region or regions that are not illuminated by radar signals (that is, radar sector blanking). Typically, there indication systems are provided as an integral part of radar display systems. An indication system of this type is generally adequate for large shipping vessels where the radar systems are located in areas not easily accessible by personnel such as at the top of the ships' mast. Hence, the risk of personnel being exposed to electromagnetic radiation from the radar antenna would be minimal. On naval vessels for example, further radiation hazard ("Radhaz") procedures are employed to protect an individual who may be required to ascend a mast to undertake maintenance or repairs.

On small craft, the use of a radar display system alone does not provide an adequate means for protecting individuals particularly where navigational radar systems for example, are located above the bridge or cockpit area rather than on a mast. These areas are generally easily accessible by individuals moving about the craft. This can result in individuals being exposed to electromagnetic radiation inadvertently as they may not be aware that the radar is transmitting and if it is transmitting, which sectors, if any, have been switched to sector blanking.

### SUMMARY OF THE INVENTION

It is therefore an object of the present invention to provide a radar dome illumination system which at least goes some way towards overcoming the abovementioned disadvantages or which will at least provide the public with a useful choice.

Accordingly, in a first aspect the invention consists in a radar system comprising:
an antenna system which in use, transmits and receives radar signals in multiple directions within multiple sectors,
a radar controller which energises said antenna system to transmit radar signals in selected directions in said sectors,
a visual illumination system associated with said antenna system and which includes in at least one sector an energisable visual indicator, and
a visual interface circuit that receives a signal from said radar controller to energise the visual indicator in a sector when said antenna transmits a radar signal in said sector.

Preferably, said radar controller further provides a means for selectively de-energising transmissions from said antenna system in selected directions and the corresponding sector's or sectors' visual indicator(s).

Preferably, said visual interface circuit and said visual illumination system are integrally formed with said radar system.

Alternatively, said visual interface circuit and said visual illumination system are able to be retrofitted to an existing radar system.

Preferably, said radar controller generates a bearing pulse representative of the directions that said radar signal is being transmitted and each of said bearing pulses are incrementally counted by a counter circuit which provides an output signal representative of said count to said visual interface circuit.

Preferably, said visual interface circuit provides an output signal to energise a visual indicator in said visual illumination system in the sector corresponding to the bearing pulse for a predetermined time period.

Preferably, said energised visual indicator is de-energised after said predetermined time period.

Preferably, said predetermined time period is selectable between 200 and 500 milliseconds duration.

Preferably, visual indicators are displaced at regular intervals about the periphery of a gasket located between an upper and a lower radar assembly.

Preferably, said visual indicators are integrally formed with said gasket during a moulding or extruding process.

Preferably, in use, said gasket abuts said upper and lower radar assemblies and said visual indicators are visible external to said antenna system.

Preferably, said lower radar assembly forms the lower section of a radar dome.

Alternatively, said lower radar assembly forms the lower section of a radar antenna mast member.

Preferably, said upper radar assembly member forms the upper section of a radar dome.

Alternatively, said upper radar assembly member forms the upper section of a radar antenna mast member.

In a second aspect the invention consists in a method of indicating to a user that a radar system antenna is transmitting radiation in a sector of the radar's field of vision comprising the steps of:
providing at least one visual indicator in the sector,
determining when the antenna is transmitting in the sector, and
energising a visual indicator in a sector when the antenna is transmitting in that sector.

Preferably, the method further comprises the steps of:
rotating the transmitting angle of the antenna and generating bearing pulses representative of an angle of rotation,
incrementally counting said bearing pulses as said antenna rotates using a counter circuit,
providing the counted bearing pulses as an angular reference representing the angle of rotation of said antenna to a visual interface circuit,
energising a visual indicator within the sector corresponding to the angle of rotation represented by the counted bearing pulse for a predetermined time period, and
de-energising said visual indicator after said predetermined time period.

Preferably, said counter circuit is reset after each rotation of said radar antenna.

Preferably, said predetermined time period is selectable between 200 and 500 milliseconds duration.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

This invention consists in the foregoing and also envisages constructions of which the following gives examples.

### BRIEF DESCRIPTION OF DRAWINGS

Preferred forms of the present invention will now be described with reference to the accompanying drawings in which;
**Figure 1** is a schematic of a typical radar dome configuration,
**Figure 2** is a schematic of the gasket system of the present invention providing an interface between radar dome members,
**Figure 3** is a schematic of the radar illumination system of the present invention showing the placement of the visual illumination devices, and
**Figure 4** is a flow diagram of the logic control system.

### DETAILED DESCRIPTION OF THE PREFERRED EMBODIMENTS

Whilst there are number of different radar systems installed on ships and small pleasure craft the present invention is directed to radar systems installed on pleasure craft where the risk of exposure to electromagnetic radiation is enhanced as a result of radar antennae being mounted in areas which are easily accessible to individuals. Such radar systems are generally used for navigational purposes. These systems include a radar visual display and control system which is generally enclosed in the bridge or cockpit area of the pleasure craft electrically connected to the radar antenna. The antenna system is mounted in an area such that the antenna is free to rotate with minimal surrounding obstructions to limit the number of 'dead zones' when the antenna transmits and sweeps through 360°. Alternatively, non-rotating planar array type radar systems are fixed to a structural member in a position that is clear of obstructions forward of the array in order to achieve maximum "target" detection as well as limiting the number of "dead zones".

The majority antenna systems currently available have a rotating joint which interconnects the antenna to a flanged antenna support bracket used to mount the antenna system to the pleasure craft bridge roof, mast or other structural member. Different antenna platforms are available which are either free mounted such that an individual can physically see the antenna or alternatively the antenna system may be mounted within a radar dome. However, as the radar dome is opaque, there is an increased degree of uncertainty as to whether the antenna is rotating and/or transmitting. Even in the case of an exposed antenna it is still desirable to provide an indication of which direction the antenna radiation is actually being transmitted.

Existing radar control systems provide a number of operational options which can be selected by an individual such as the ability to control the radar visual display range, reducing the effects of clutter and the ability to inhibit radar transmissions between various angles within the 360° angle of radar rotation, known as "sector blanking". External to the bridge or cockpit area of a pleasure craft an individual has no visual indication or ability to determine if the radar is transmitting and therefore the individual may be at risk of being exposed to the harmful effects of electromagnetic radiation.

Antenna platforms generally have an insulating gasket layer used to mount the flanged antenna support bracket to the ship or boat structure. This gasket layer is used to reduce vibration and absorb shock as a result of the boat moving through the water. A similar gasket layer is used when attaching a radar dome to a ship or boat structure and is placed between the main radar dome and the lower dome deck assembly.

A preferred embodiment of the radar system of the present invention has a visual illumination means which provides improvements over systems currently available to the marine industry. In particular, a radar system is described which provides a visual indication of those sectors in which a radar is transmitting and those sectors in which the radar is not transmitting or has been sector blanked. A system of this type will provide a means of enhancing personnel safety through the provision of a clear and unmistakable visual indication of those areas in which individuals may be exposed to electromagnetic radiation and does not require an individual to view a radar display beforehand.

It will therefore be appreciated that this system is applicable to a number of different radar platform types, for example a radar antenna enclosed by a radar dome which would include the illumination means of the present invention around the periphery of the enclosed radar antenna. Alternatively, where a radar antenna is not enclosed by a radar dome, the illumination means could be provided around or in close proximity to the radar antenna assembly.

In the case of a radar antenna enclosed by a radar dome, one embodiment of the present invention involves incorporating indicators in a gasket located between the upper and lower radar dome halves. The gasket disclosed may be of differing diameters depending on radar dome circumference but is typically manufactured to standard widths. The gasket system is preferably constructed of a high density, high impact rubber or other appropriate material. This is to effectively eliminate any softening as well as being resistant to the effects of ultra violet radiation. As the gasket system is load bearing and subject to compression stresses, materials such as silicon rubber or rubber products may be used.

It will be appreciated that the gasket system as described in the preferred embodiment of the present invention can be used in the marine industry generally but will now be described below with reference to use in the construction of a radar dome assembly to protect a standard radar navigation antenna which in use, is mounted on the bridge or cockpit of a pleasure craft. It will be appreciated that the present invention can be applied to various dimensions of radar dome, including but not limited to pleasure craft navigation antenna.

### Gasket System

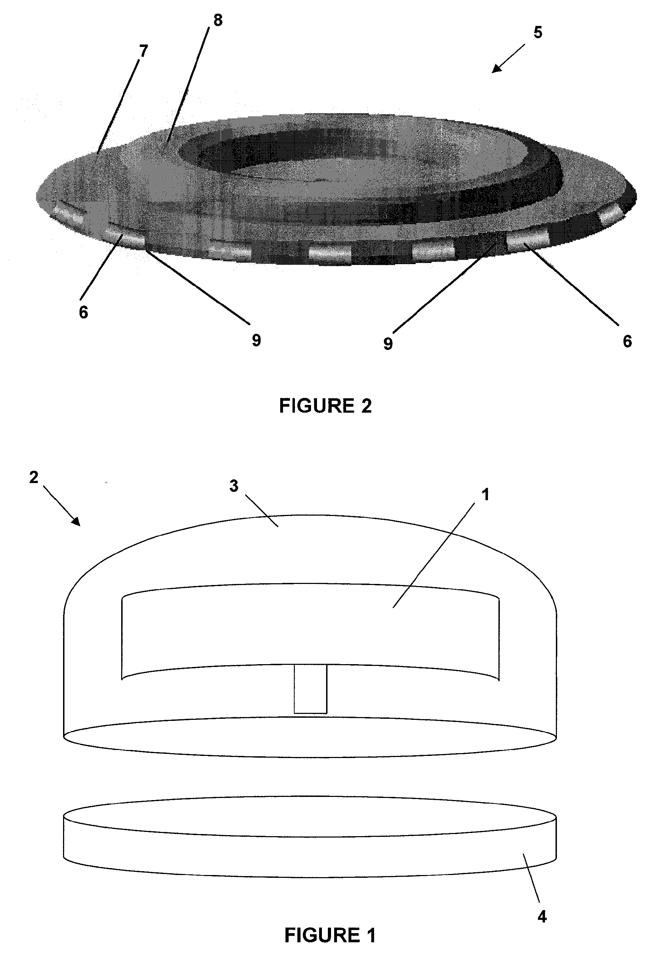

With reference to Figure 1 a radar antenna 1 is shown having an external shell known as a radar dome 2 constructed of an upper 3 and lower case half 4 of a style known as a dome scanner. The radar antenna 1 and radar dome 2 are mounted on the bridge or cockpit of a marine pleasure craft. The upper 3 and lower dome 4 structures are generally formed by a framework which is encased in an outer shell thereby protecting the radar antenna 1 from the weather and possible corrosion for example. The radar dome 2 as a whole is of semi-circular shell construction and normally formed from glass reinforced plastic (GRP), polycarbonate or other appropriate material.

With reference to Figure 2, the gasket system 5 is made from an appropriate solid but flexible high impact high density rubber material such that the gasket system may be moulded or extruded in predetermined lengths which conform to the circumference of the lower radar dome member 4. Typical gasket system 5 materials include silicon rubber or other high density rubber products may be used.

Illumination devices 6, such as hi-bright LEDs, may be inserted into the gasket system 5 during the gasket manufacturing process. In order to prevent the gasket system 5 from blocking any light being emitted by the illumination devices 6, the illumination devices 6 are to be encased in small transparent enclosures (not shown). Such enclosures will be constructed of plastic or other appropriate material.

In use, the bottom of the gasket 9 fits between the lower dome member 4 and the upper dome member 3 with the illumination devices 6 providing illumination external to the radar dome 2. The upper dome member 3 is located on top surface 7 of the gasket system 5 against an 'O' ring style lip 8 which provides a watertight seal between the upper 3 and lower dome 4 members. Preferably, a minimum of six illumination devices 6 are displaced around the periphery of the radar dome 2. Four illumination devices 6 may be placed at 90° points around the dome 2, where 0° corresponds to the bow of the marine vessel, 90° is starboard of the vessel, 180° towards the stern and 270° to port of the vessel. Two further illumination devices 6 may be placed midway between 90° and 180° at say 120° and the second illumination device 6 being placed between 180° and 270°, at say 240°.

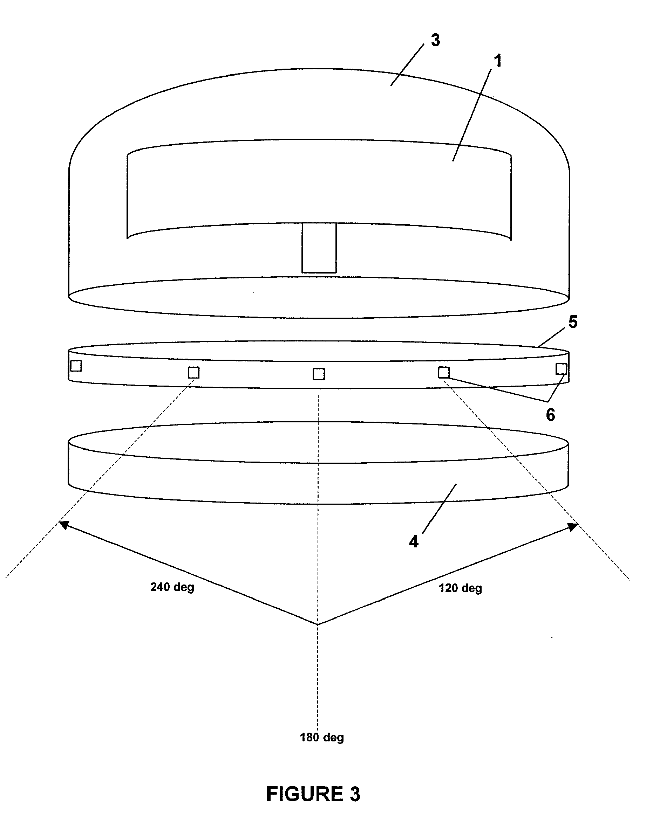

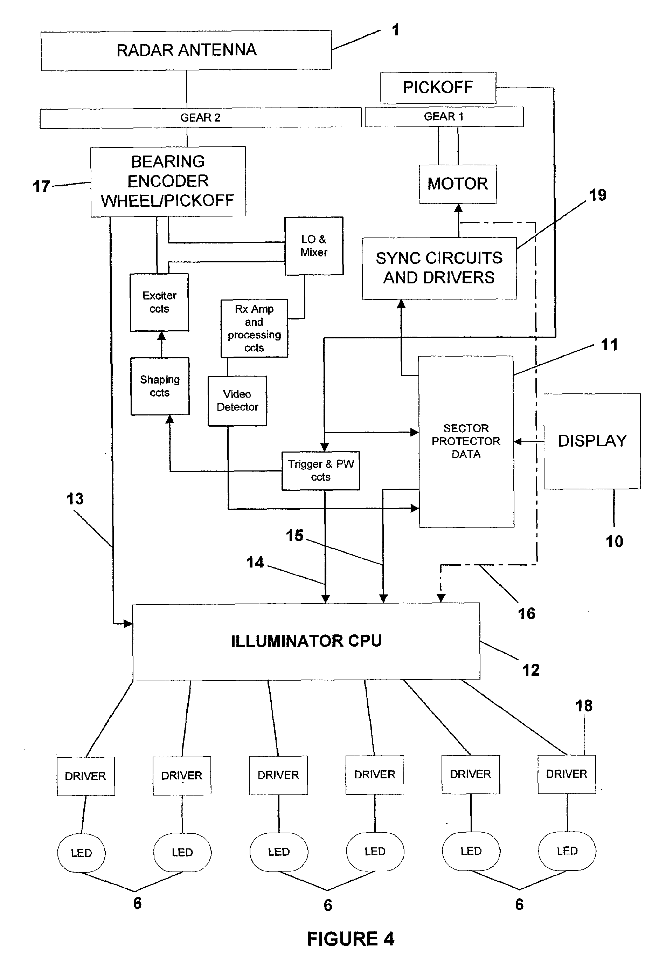

In small ship navigation systems the radar system generally has a mechanism which may be set by the user to stop radar electromagnetic transmissions between certain angles of rotation of the radar antenna 1. In consideration of marine pleasure craft, the angles between which individuals would be most vulnerable are generally between 120° and 240° as illustrated in Figure 3. It is between these angles that the crew may use the upper deck areas for steering the vessel, fishing or undertaking other daily activities. With reference to Figure 4, in use, the user would therefore select the "sector protector" on the radar display unit 10 to effectively turn off or 'blank' radar transmissions between 120° and 240°. Hence, during each sweep of the radar antenna 1, those areas in which radar transmissions have ceased are shown on the radar display system 10 as being blank areas showing no radar reflections or returns. Hence, when sector protector is "ON" the illumination devices located between 120° and 240° remain off while the illumination devices 6 located between 241° and 119° will be switched on as the radar antenna 1 rotates through each illumination device position 6 thereby having a scanner style visual indication of the radar transmission operation and blanking. Therefore a user is provided with a visual indication of the sector protector being turned on. Whilst the system has been described such that the illumination devices 6 turn on to indicate radar transmissions in a number of sectors, the user has the option of reversing the illumination output such that the illumination devices 6 turn on in those sectors which are protected and the radar antenna 1 is not transmitting.

### Radar Interface

It is well known in the art that all radar systems have a "flash" trigger 14 that is positioned at the "bow up" point of the radar such that when the radar antenna 1 passes through zero degrees the radar visual indicator circuit will sense the "flash" trigger 14. As illustrated in Figure 4, this signal is used in the present invention to drive an illumination interface circuit 12 and drivers 18 to turn on the illumination device 6 positioned at zero degrees on the radar dome 2 and then turn it off again after a preset period. It is also known that for navigation type radar, a single antenna rotation generally takes between 2 and 2.4 seconds per rotation and within the radar set is a motor encoding wheel 17 or counter circuit which counts bearing pulses normally in the order of every 0.25° or 0.5° as the antenna 1 is being rotated. The illumination interface circuit 12 of the present invention uses this data 13 as feedback from the motor encoding wheel 17, taking into account the number of bearing pulses, and turns each illumination device 6 on accordingly during the radar rotation. In systems which do not have a bearing encoder wheel 17, bearing 16 can alternatively be derived from the synchronisation and driver circuits 19. Due to the speed of rotation of the radar antenna 1 the illumination devices 6 are turned on for a time frame in the order of between 200 and 500 milliseconds but more generally for 250 milliseconds after which time the illumination devices are turned off again, in turn, until the next sweep of the radar antenna 1.

When the user turns on the "sector protector" on the radar system display 10, the illumination indicating circuit 12 remembers the 'last used' state sending a digital command 15 from the display unit 10 to the sector protector connector 11 and output to the illumination indicator circuit 12 which in turn will not provide an output at the required 'blocked count' position and the illumination devices 6 will remain inhibited or de-energised. Alternatively, the user may select to have the illumination output reversed such that at the 'blocked count' position the illumination devices 6 will be driven on. Hence, external to the boat's bridge or cockpit area, an individual is provided with a clear visible indication that the radar antenna 1 is not transmitting in a particular sector and therefore does not risk exposure to harmful electromagnetic radiation whilst positioned within the particular sector.

As a large number of radar systems are currently installed on pleasure craft where the visual illumination system would be most beneficial, the present invention has been designed such that it will be possible to retrofit existing radar systems using signal outputs presently generated by existing radar systems to drive the visual illumination system.

The use of pulsing on and off illumination devices 6 around the circumference of the radar dome 2 provides individuals with a quick and easy visual reference that the radar antenna 1 is on and transmitting in a given direction or turned off, thereby providing an important personal safety indication. The use of such a system will reduce the risk of individuals being inadvertently exposed to electromagnetic radiation and the accumulating detrimental effects such exposure can have on the human body.

## Claims

1. A radar system comprising:
an antenna system which in use, transmits and receives radar signals in multiple directions within multiple sectors,
a radar controller which energises said antenna system to transmit radar signals in selected directions in said sectors,
a visual illumination system associated with said antenna system and which includes in at least one sector an energisable visual indicator, and
a visual interface circuit that receives a signal from said radar controller to energise the visual indicator in a sector when said antenna transmits a radar signal in said sector.

2. A radar system as claimed in claim 1, wherein said radar controller further provides a means for selectively de-energising transmissions from said antenna system in selected directions and the corresponding sector's or sectors' visual indicator(s).

3. A radar system as claimed in claim 1 or claim 2, wherein said visual interface circuit and said visual illumination system are integrally formed with said radar system.

4. A radar system as claimed in claim 1 or claim 2, wherein said visual interface circuit and said visual illumination system are able to be retrofitted to an existing radar system.

5. A radar system as claimed in any one of the preceding claims, wherein said radar controller generates a bearing pulse representative of the directions that said radar signal is being transmitted and each of said bearing pulses are incrementally counted by a counter circuit which provides an output signal representative of said count to said visual interface circuit.

6. A radar system as claimed in claim 5, wherein said visual interface circuit provides an output signal to energise a visual indicator in said visual illumination system in the sector corresponding to the bearing pulse for a predetermined time period.

7. A radar system as claimed in claim 6, wherein said energised visual indicator is de-energised after said predetermined time period.

8. A radar system as claimed in claim 6 or claim 7, wherein said predetermined time period is selectable between 200 and 500 milliseconds duration.

9. A radar system as claimed in any one of the preceding claims, wherein visual indicators are displaced at regular intervals about the periphery of a gasket located between an upper and a lower radar assembly.

10. A radar system as claimed in claim 9, wherein said visual indicators are integrally formed with said gasket during a moulding or extruding process.

11. A radar system as claimed in claim 9 or claim 10, wherein in use, said gasket abuts said upper and lower radar assemblies and said visual indicators are visible external to said antenna system.

12. A radar system as claimed in any one of claims 9 to 11, wherein said lower radar assembly forms the lower section of a radar dome or of a radar antenna mast member.

13. A radar system as claimed in any one of claims 9 to 12, wherein said upper radar assembly member forms the upper section of a radar dome or of a radar antenna mast member.

14. A method of indicating to a user that a radar system antenna is transmitting radiation in a sector of the radar's field of vision comprising the steps of:
providing at least one visual indicator in the sector,
determining when the antenna is transmitting in the sector, and
energising a visual indicator in a sector when the antenna is transmitting in that sector.

15. A method of indicating as claimed in claim 14 further comprising the steps of:
rotating the transmitting angle of the antenna and generating bearing pulses representative of an angle of rotation,
incrementally counting said bearing pulses as said antenna rotates using a counter circuit,
providing the counted bearing pulses as an angular reference representing the angle of rotation of said antenna to a visual interface circuit,
energising a visual indicator within the sector corresponding to the angle of rotation represented by the counted bearing pulse for a predetermined time period, and
de-energising said visual indicator after said predetermined time period.

16. A method of indicating as claimed in claim 15, wherein said counter circuit is reset after each rotation of said radar antenna.

17. A method of indicating as claimed in claim 15 or claim 16, wherein said predetermined time period is selectable between 200 and 500 milliseconds duration.

18. A radar system substantially as herein described with reference to and as illustrated by the accompanying drawings.

19. A method indicating to a user that said radar system antenna is transmitting radiation in a sector of the radar's field of vision substantially as herein described with reference to and as illustrated by the accompanying drawings.
